# EUROPÄISCHE PATENTSCHRIFT

(11) **EP 1 302 725 B1**
(45) Veröffentlichungstag und Bekanntmachung des Hinweises auf die Patenterteilung: **27.06.2007**
(21) Anmeldenummer: 02022565.2
(22) Anmeldetag: 08.10.2002
(51) Int. Cl.: F24D 19/10, F24H 9/12, F16K 43/00, F16L 29/00

(54) **Leckfreier Adapter für eine Pumpe oder ein Thermostatventil**
Leak proof adapter for thermostatic valve or pump
Connection anti-fuite pour soupape thermostatique ou pompe

(30) Priorität: 11.10.2001 DE 10150090
(43) Veröffentlichungstag der Anmeldung: 16.04.2003
(73) Patentinhaber: WILO AG, 44263 Dortmund (DE)
(72) Erfinder: Strelow, Günter, 44801 Bochum (DE)
(74) Vertreter: COHAUSZ DAWIDOWICZ HANNIG & SOZIEN

(56) Entgegenhaltungen:
- WO-A-93/14337
- DE-B- 1 550 025
- DE-C- 4 011 111
- DE-U- 29 920 138
- GB-A- 2 213 912
- GB-A- 2 259 130
- US-A- 4 432 387

## Beschreibung

Die vorliegende Erfindung betrifft ein nach dem Oberbegriff von Heizungs- oder Kühlsystem Anspruch 1.

Derartige Systeme mit Adapter zum Anschluß hydraulischer Vorrichtungen an ein Heizungs- oder Kühlsystem sind bekannt. Die Adapter bieten dabei als funktionelle Platzhalter beispielsweise die Vorteile, daß bei einem Neubau eines Gebäudes die Pumpen erst nach der Fertigstellung des Leitungssystems angeschlossen werden brauchen oder daß die Pumpen auch jederzeit auswechselbar sind, ohne daß das gesamte Heizungssystem entleert werden müßte. Die Adapter sind dazu in der Art von Schleusen mit dem Ventilmittel ausgestattet, daß ein Verschließen des Systems von außen erlaubt. Nachteilig bei den bekannten Systemen ist jedoch, daß bei der Demontage der Vorrichtung immer etwas von dem im Leitungssystem befindlichen Medium daneben geht, was bei den Anlagen besonders unangenehm ist, bei denen die Thermostatventile oder die Pumpen in Wohnräumen angebracht sind. Dann geht ein Ausbau der Vorrichtung immer mit einer erheblichen Verunreinigung des mitunter mit Teppich belegten Bodens einher. Die Menge des unvermeidlich auslaufenden Mediums stammt dabei zum Großteil aus der Vorrichtung, die sich nach dem Ausbau zwangsläufig entleeren muß. Auch durch noch so geschickte Handhabung läßt sich dieses Ärgernis nicht vermeiden.

Aus der DE 15 50 025 ist eine Schnelllösekupplung für hydraulische Systeme mit sehr hohen Drücken bekannt. Dieses Dokument zeigt die Merkmale des Oberbegriffs von Anspruch 1. An der Verbindungsstelle sind zwei Dichtplatten gelagert, die quer zur Durchflussrichtung verschieblich sind. Solche Querbewegungen erfordern verhältnismäßig viel Platz, so dass erhebliche Außenabmessungen entstehen. Ferner sind querbewegliche Dichtplatten aufwendig in der Herstellung, Abdichtung und Bedienbarkeit.

Aufgabe der Erfindung ist es daher, ein mit kunstruktiv einfachen Mitteln umsetzbares und damit preiswertes System zu schaffen, mit dem die Menge des bei der Demontage einer hydraulischen Vorrichtung auslaufenden Mediums auf ein zu vernachlässigendes Minimum reduziert und damit eine Verunreinigung des Bodens vermieden werden kann.

Diese Aufgabe wird durch ein System mit den Merkmalen des Anspruchs 1 gelöst.

Das Ventilmittel ist mit zwei zusammenwirkenden Dichtmitteln ausgebildet. Dabei befindet sich eines der beiden Dichtmittel im Adapter, während das andere Dichtmittel an der Vorrichtung gehalten ist. Beide zusammenwirkenden Dichtmittel sind in dem Zustand, in dem Vorrichtung und Adapter aneinander koppeln (gekoppelter Zustand), derart in Verbindung, daß sie als einheitliches Ventil wirken und einen leckfreien Strom zwischen Adapter und hydraulischer Vorrichtung gewährleisten. Im gekoppelten Zustand lassen sie sich von einer geschlossenen Position, in welcher der Strom in die Vorrichtung hinein blockiert ist, in eine offene Stellung bringen. Wird die Vorrichtung vom Adapter abgenommen (entkoppelter Zustand), so verschließt das eine Dichtmittel die Vorrichtung und das andere Dichtmittel den von der Vorrichtung getrennten Adapter. Bei der Trennung von Vorrichtung und Adapter tritt kein Medium aus. Diese "trockene" Demontage ist möglich, da zwischen den beiden Dichtmitteln nahezu kein Totraum existiert, der sich bei der Demontage unkontrolliert entleeren kann. Mit dieser durch die Erfindung ermöglichten trockenen Trennung kann eine Verunreinigung des Bodens vermieden werden. Hierbei ist besonders vorteilhaft, dass die Dichtscheiben von der bedeckenden Stellung in die Durchlassstellung drehverstellbar sind. Dies vereinfacht die Herstellung und Bedienung und führt zu besonders kleinen Abmessungen.

Besonders vorteilhaft läßt sich die Erfindung einsetzen, wenn eine Kreiselpumpe, oder ein Thermostatventil die Vorrichtung bildet. Derartige Thermostatventile sind hinlänglich bekannt. Als Pumpen lassen sich bevorzugt in der Nähe des Heizkörpers und damit direkt im Wohnraum angebrachte "dezentrale" Pumpen einsetzen. Solche dezentralen Pumpen bilden die Basis einer neuartigen und besonders energiesparenden Technologie.

Um die trockene Montage und Demontage einer solchen Vorrichtung an einem Leitungssystem zu ermöglichen, weist das Ventilmittel, wie dargelegt, ein am Adapter befindliches erstes Dichtmittel auf, das den Anschlußflansch des Adapters von außen bedeckt und mit dem die Mündungsöffnungen der Leitungen im entkoppelten Zustand abdichtbar sind. Zudem weist das Ventilmittel ein an der Vorrichtung, also beispielsweise an der Pumpe oder an dem Thermostatventil, befindliches zweites Dichtmittel auf, das den Gegenflansch bedeckt und mit dem im entkoppelten Zustand die Mündungsöffnungen der in der Vorrichtung befindlichen Kanäle abdichtbar sind. Beide Dichtmittel liegen im entkoppelten Zustand dichtend aneinander an, um den leckfreien Strom zwischen Adapter und hydraulischer Vorrichtung zu gewährleisten. In diesem Zustand ist das Ventilmittel mit den beiden Dichtmitteln von der geschlossenen in eine offene Position bringbar.

Besonders einfach und damit vorteilhaft läßt sich das System realisieren, wenn sowohl der Anschlußflansch als auch der Gegenflansch jeweils eine zylindrische Stirnfläche aufweisen, in der jeweils die Mündungsöffnungen angeordnet sind. Zur Kopplung werden die beiden Stirnflächen aufeinander gesetzt und die beiden Teile über einen Verschluß mechanisch miteinander verbunden. Eine besonders komfortable Verbindung von Adapter und hydraulischer Vorrichtung ist über einen die Flansche umgreifenden Schnellverschluß, insbesondere einen Bajonettverschluß, möglich. Das Anbringen der Vorrichtung läßt sich dann mit nur einem Handgriff erledigen. Dazu ist zu bemerken, daß es selbstverständlich besonders vorteilhaft ist, wenn die Vorrichtung erst abgenommen werden kann, wenn das Ventil geschlossen ist. So wird sichergestellt, daß keine oder nur eine kleine zu vernachlässigende Menge des Mediums nach dem Entfernen der Vorrichtung austreten kann. Ein Öffnen und Schließen des Ventils wird dabei durch eine Drehung des Verschlusses bewirkt, der ein von außen steuerbares Betätigungsmittel darstellt.

Die Dichtscheiben sind insbesondere aus Kunststoff ausgebildet, die Löcher aufweisen, wobei diese Löcher mit den Mündungsöffnungen im Adapter und entsprechend in der Vorrichtung in Deckung bringbar sind. Solche runden Dichtscheiben sind einfach, robust und kostengünstig herstellbar und lassen sich gut in das Konzept des Systems einbinden.

In einer weiteren vorteilhaften Ausführungsform ist im Adapter ein Kurzschlußmittel angeordnet, das eine Bypaßleitung zur Verbindung der Vorlaufleitung mit der Rücklaufleitung bildet. Diese Kurzschlußmittel kann die Versorgung des Heiz- oder Kühlsystems gewährleisten, wenn keine Vorrichtung an den Adapter angeschlossen ist. Das System kann somit vollständig befüllt und beispielsweise mit einer zentralen Pumpe oder mit thermischem Antrieb betrieben werden. Der Durchfluß durch die Radiatoren kann so sichergestellt werden. In einem besonders einfachen Fall ist das Kurzschlußmittel eine dicke Scheibe im Durchmesser der darüber angeordneten ersten Dichtscheibe, die zusammen mit der Dichtscheibe verdrehbar ist. In das Material der Scheibe ist die Bypaßleitung eingebracht. Dabei ist es auch möglich und konstruktiv besonders einfach, das Kurzschlußmittel und die Dichtseibe einteilig auszubilden. Der Adapter kann wegen der Bypaßleitung auch ohne den Einsatz einer hydraulischen Vorrichtung betrieben werden, wobei das Kurzschlußmittel durch ein von außen zugängliches Betätigungsmittel von der geschlossenen in die geöffnete Stellung gebracht werden kann. In der geöffneten Stellung ist ein ungehinderter Durchfluß des Mediums durch den Adapter gewährleistet. In dieser Ausführungsform erfüllt der Adapter die Funktion eines einfachen Absperrventils und steht dennoch für den späteren Einbau einer hydraulischen Vorrichtung zu Verfügung.

Besondere Ausführungsbeispiele der Erfindung sind in den Figuren 1 bis 4 dargestellt und werden im folgenden näher beschrieben.

Es zeigen:
- Figur 1:: eine an einem Adapter angebrachte Pumpe in Seitenansicht, wobei das Ventilmittel in geschlossenem Zustand gezeigt ist,
- Figur 2:: ein System nach Figur 1 in geöffnetem Zustand,
- Figur 3:: eine Draufsicht auf ein Dichtmittel und
- Figur 4:: einen Ausschnitt mit den aufeinanderliegenden Dichtmitteln.

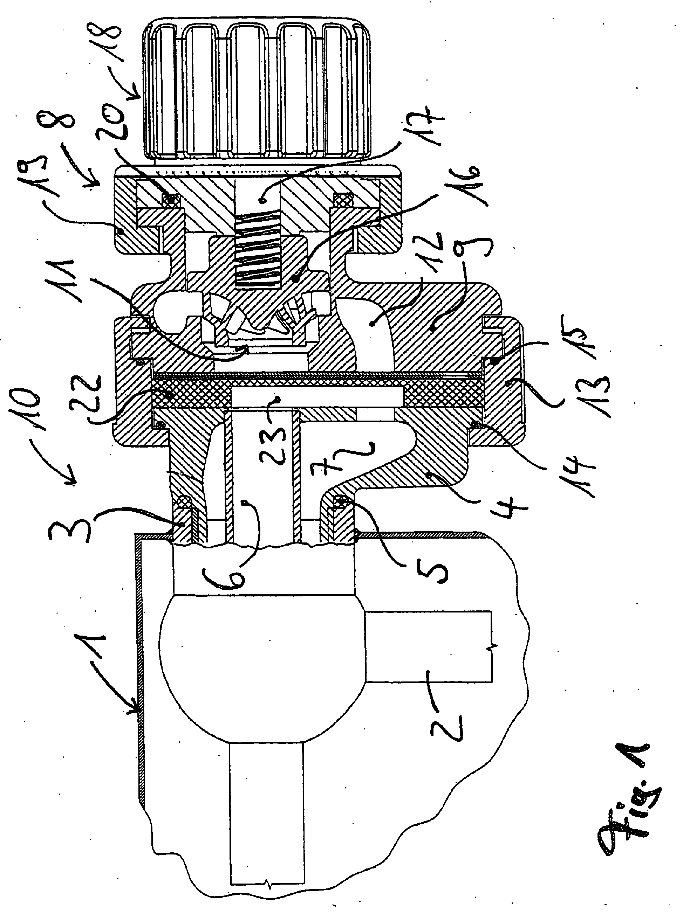

In der Figur 1 ist ein System gezeigt, das einen Wärmeüberträger (Heizkörper) 1 eines Heizungs- oder Kühlsystem umfaßt. Im Inneren des Heizkörpers 1 ist eine Zulaufleitung 2 angebracht, die über einen an den Heizkörper 1 angeschweißten Stutzen 3 zugänglich ist. Auf den Stutzen 3 ist über ein Gewinde ein Anschlußflansch 4 aufgeschraubt und über O-Ringe 5 abgedichtet. Der Anschlußflansch 4 und der Stutzen 3 bilden zusammen einen Adapter 10, in dem eine Kreiselpumpe 8 als hydraulische Vorrichtung, die mit einem entsprechenden Gegenflansch 9 auf den Adapter 10 lösbar aufgesetzt ist. Anschlußflansch 4 und der Gegenflansch 9 weisen jeweils eine zylindrische Stirnseite auf, in der jeweils die Mündungsöffnungen angeordnet sind. In dem Gegenflansch 9 münden entsprechend zwei Kanäle, von denen einer in den Saugmund 11 der Pumpe 8 führt, während der andere den Auslaßkanal der Pumpenkammer 12 bildet. Deutlich zu erkennen ist, daß in dem dargestellten gekoppelten Zustand eine Mündung im Adapter 10 jeweils mit einer Mündung eines Kanals der Pumpe 8 fluchtet. Der Strom zwischen dem Adapter 10 und der Pumpe ist durch ein zu beschreibendes Ventilmittel unterbrechbar.

Bei der Kreiselpumpe 8 handelt es sich um eine sogenannte "dezentrale" Pumpe, die im Gegensatz zu einer zentral im Heizungskeller angebrachten und das gesamte System versorgender zentralen Pumpen direkt am Heizkörper angebracht ist und die Funktion eines Thermostatventils übernimmt. Die Pumpe 8 ist vermittels eines Überwurfrings 13 an dem Adapter 10 gehalten und über O-Ringe 14 und 15 abgedichtet. Mit dem Überwurfring 13 ist ein Bajonettverschluß realisiert. Die Pumpe weist in bekannter Weise ein Laufrad 16 auf, das auf einer Welle 17 gehalten und von einem Motor 18 angetrieben ist. In diesem Fall ist die Laufradkammer der Pumpe von dem Gegenflansch 9 ausgebildet, in dessen zentrale Öffnung von hinten das Laufrad 16 eingesetzt wird. Der Motor 18 mit dem aufgesetzten Laufrad 16 ist gleichfalls vermittels eines Überwurfringes 19 am Gegenflansch 9 gehalten und über eine Dichtung 10 abgedichtet.

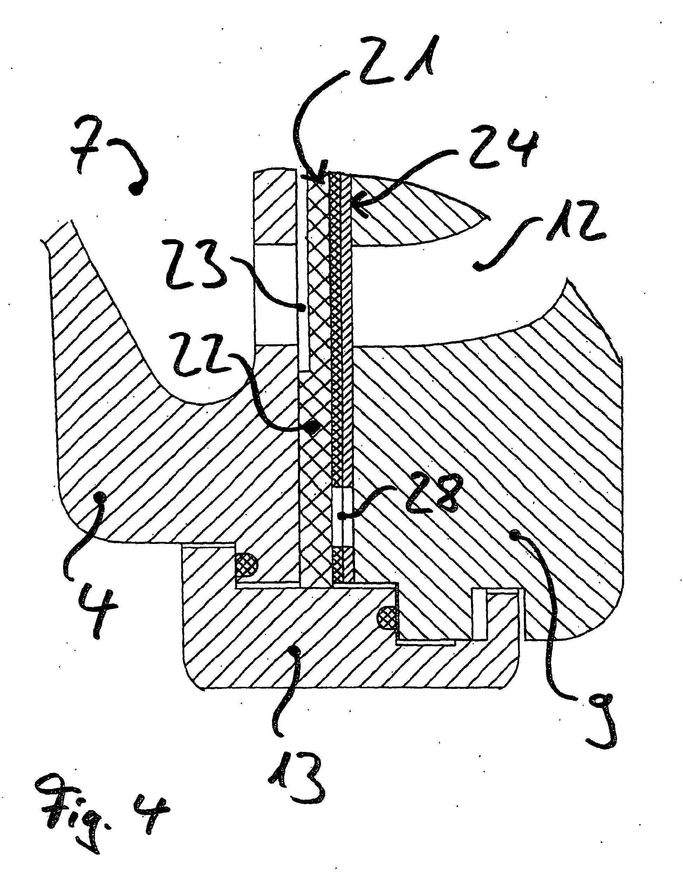

Erfindungsgemäß ist zwischen dem Adapter 10 und der Pumpe 8 ein Ventilmittel angeordnet, um einen trockenen Ausbau der Pumpe 8 zu ermöglichen. Das Ventilmittel weist ein am Adapter 10 befindliches Dichtmittel auf, das von einer die Stirnfläche des Anschlußflansches 4 bedeckenden ersten Dichtscheibe 21 (Fig. 4) realisiert ist. In diesem Fall liegt die Dichtscheibe 21 auf einem im Adapter befindlichen Kurzschlußmittel 22, das eine Bypaßleitung 23 zur Verbindung der Vorlaufleitung 6 mit der Rücklaufleitung 7 aufweist. Das Kurztschlußmittel 22 ist eine Scheibe ausreichender Stärke und im Durchmesser der darüber angeodrneten Dichtscheibe 21. Das Kurzschlußmittel 22 ist zusammen mit der Dichtscheibe 21 verdrehbar. In einer anderen Form könnte das Kurzschlußmittel und die Dichtscheibe einteilig ausgebildet sein. In Figur 4 ist der geschlossene Zustand gezeigt, in dem die Dichtscheiben 21 und 24 den Adapter und die Pumpe abdichten, so daß diese Komponenten getrennt werden können.

Das Ventilmittel weist zudem ein an der Pumpe befindliches Dichtmittel auf, das gleichfalls als flache Dichtscheibe 24 realisiert ist und das den Gegenflansch 9 bedeckt. Mit den aus Kunststoff gefertigten Dichtscheiben 21 und 24 sind die Mündungsöffnungen der Kanäle im entkoppelten Zustand abdichtbar. Die beiden Dichtscheiben 21 und 24 liegen in dem gezeigten gekoppelten Zustand dichtend aneinander an und gewährleisten einen leckfreien Strom zwischen Adapter 10 und Pumpe 8. Die Dichtscheiben 21 und 24 können im gekoppelten Zustand durch eine Rotation, die von Außen durch Drehung der Pumpe 8 oder des Ringes 13 bewirkt wird, von einer den Strom blockierenden geschlossenen Position in eine offene Position gebracht werden, wobei in der Durchlaßstellung die Öffnungen in den Dichtscheiben mit den Mündungsöffnungen fluchten. Die Pumpe 8 oder der Ring 13 weisen somit ein von außen bedienbares Betätigungsmittel auf oder bilden das Betätigungsmittel. Um eine gemeinsame Rotation der beiden Dichtscheiben 21 und 24 und gegebenenfalls des Kurzschlußmittels 22 zu bewirken, müssen die Teile miteinander in Wirkverbindung stehen und vermittels des Betätigungsmittels verdrehbar sein. Die Wirkverbindung kann durch einen Zapfen realisiert werden, der in entsprechenden Bohrungen der anderen Teile eingreift.

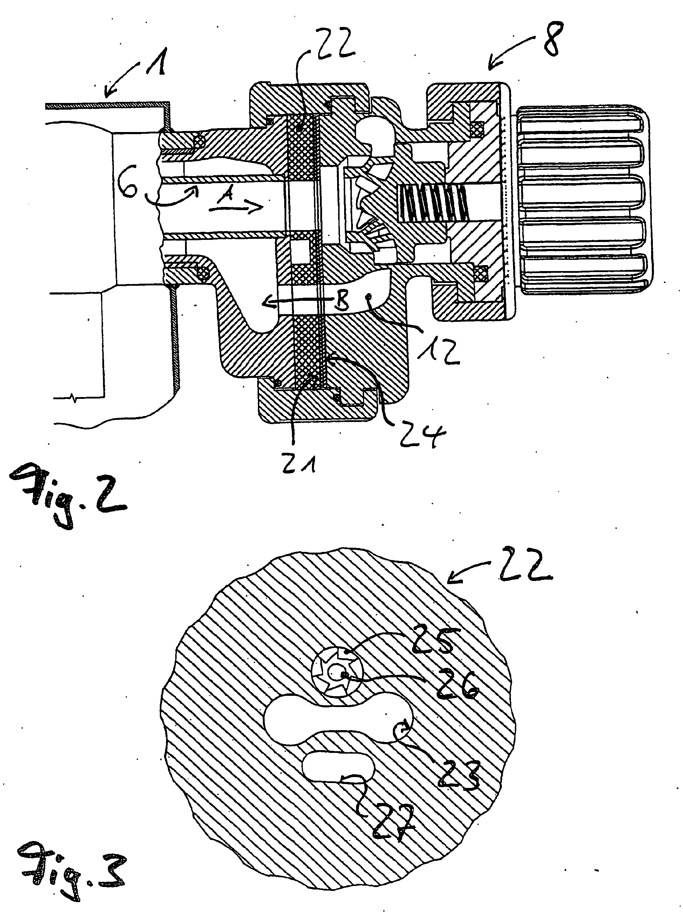

In Figur 2 ist die gleiche Konstellation wie in Figur 1 gezeigt, nur daß das Ventilmittel in einer offenen Stellung sich befindet. Die Pumpe 8 saugt über ihren Saugmund das Medium aus der Vorlaufleitung 6 an (Pfeil A), um es über den Auslaßkanal 12 auszustoßen (Pfeil B). Die Öffnungen der Dichtscheiben 21 und 24 und des Kurzschlußmittels 22 sind in diesem Fall in Deckung, so daß der Durchfluß möglich ist. In Figur 3 ist das Kurzschlußmittel 22 in Draufsicht gezeigt. Dieses weist eine dezentral angebrachte Öffnung 25 auf, die den Durchgang zum Laufrad 26 gewährleistet. Die Öffnung 27 kann mit dem Auslaßkanal 12 zur Deckung gebracht werden. Zentral in das Kurzschlußmittel 22 ist die Bypaßleitung 23 eingebracht, die bei einer Rotation um 90º mit dem Hin- und Rücklauf 6 und 7 in Deckung bringbar ist.

Aus Figur 4 ist ersichtlich, daß der Totraum 28, der bei der Demontage noch mit Medium gefüllt sein kann, lediglich durch die Öffnungen in den Dichtscheiben gebildet wird.

In diesem Ausführungsbeispiel werden das Ventilmittel und die Öffnungen an der Pumpe von Hand verschlossen. Nachdem die Verbindung zwischen Pumpe und Ventil unterbrochen ist kann die Pumpe ausgebaut werden. Zum Ausbau der Pumpe wird diese um den Drehpunkt des Ventilmittels gedreht. Dabei werden die Öffnungen von Adapter und Pumpe durch die jeweilige Dichtscheibe verschlossen. In einer anderen Ausführungsform kann das Ventilmittel so gestaltet sein, daß die Abdichtung radial auf einer ebenen oder gebogenen Fläche erfolgt. Je nach Ausführung wird das Verschließen durch ein Verschieben oder ein Drehen vom Ventilmittel oder der Pumpe erreicht.

## Patentansprüche

1. Heizungs- oder Kühlsystem mit einem System, das einen Adapter (10) umfasst, mit einem Anschlußflansch (4), in dem eine Vorlaufleitung (6) und eine Rücklaufleitung (7) münden, und umfassend eine hydraulische Vorrichtung (8), insbesondere eine Pumpe oder ein Thermostatventil, die mit einem entsprechenden Gegenflansch (9), in dem zwei Kanäle münden, an dem Adapter (10) lösbar anbringbar ist, wobei eine Mündung im Adapter (10) in einem gekoppelten Zustand jeweils mit einer Mündung eines Kanals der Vorrichtung (8) fluchten und wobei der Strom zwischen dem Adapter (10) und der hydraulischen Vorrichtung (8) durch ein Ventilmittel unterbrechbar ist, wobei das Ventilmittel eine am Adapter (10) befindliche erste Dichtscheibe (21) aufweist, die den Anschlußflansch (4) von außen bedeckt und mit dem im entkoppelten Zustand die Mündungsöffnungen der Leitungen abdichtbar sind, daß das Ventilmittel eine an der hydraulischen Vorrichtung (8) befindliche zweite Dichtscheibe (24) aufweist, die den Gegenflansch (9) bedeckt und mit der im entkoppelten Zustand die Mündungsöffnungen der Kanäle abdichtbar sind, daß die beiden Dichtscheiben (21), 24) im gekoppelten Zustand dichtend aneinander anliegen, um einen leckfreien Strom zwischen Adapter (10) und hydraulischer Vorrichtung (8) zu gewährleisten, daß die Dichtscheiben (21, 24) im gekoppelten Zustand von einer den Strom blockierenden geschlossenen Position in eine offene Position bringbar sind und **dadurch gekennzeichnet, daß** die Dichtscheiben (21, 24) im gekoppelten Zustand von einer die Mündungsöffnungen bedeckenden Stellung in eine Durchlaßstellung drehbar sind, wobei in der Durchlaßstellung die Öffnungen in den Dichtscheiben mit den Mündungsöffnungen feuchten.

2. System nach Anspruch 1, **dadurch gekennzeichnet,daß** der Anschlußflansch (4) und der Gegenflansch (9) jeweils eine zylindrische Stirnfläche aufweisen, in der jeweils die Mündungsöffnungen angeordnet sind.

3. System nach einem der vorherigen Ansprüche, **dadurch gekennzeichnet, daß** die Dichtscheiben (21, 24) im gekoppelten Zustand unmittelbar aneinander anliegen.

4. System nach einem der vorherigen Ansprüche, **dadurch gekennzeichnet, daß** die Dichtscheiben (21, 24) aus Kunststoff sind.

5. System nach Anspruch 1, **dadurch gekennzeichnet, daß** die Drehung durch ein von außen steuerbares Betätigungsmittel bewirkt wird.

6. System nach einem der vorherigen Ansprüche, **gekennzeichnet durch** ein im Adapter (10) befindliches Kurzschlußmittel (22), das eine Bypaßleitung (23) zur Verbindung der Vorlaufleitung (6) mit der Rücklaufleitung (7) aufweist.

7. System nach Anspruch 6, **dadurch gekennzeichnet,daß** das Kurzschlußmittel (22) eine Scheibe im Durchmesser der darüber angeordneten Dichtscheibe (21) ist, die mit der Dichtscheibe (21) verdrehbar ist.

8. System nach Anspruch 7, **dadurch gekennzeichnet, daß** das Kurzschlußmittel (22) und die erste Dichtscheibe (21) zusammen als ein Bauteil ausgebildet sind.

9. System nach Anspruch 5, **dadurch gekennzeichnet, daß** die beiden Dichtscheiben (21, 24) und gegebenenfalls das Kurzschlußmittel (22) miteinander in Wirkverbindung stehen und vermittels des Betätigungsmittels verdrehbar sind.

10. System nach Anspruch 5 oder 9 **dadurch gekennzeichnet, daß** die hydraulische Vorrichtung (8) das Betätigungsmittel aufweist.

11. System nach einem der vorherigen Ansprüche, **dadurch gekennzeichnet, daß** der Adapter (10) und die hydraulische Vorrichtung (8) über einen die Flansche umgreifenden Schnellverschluß (13), insbesondere einen Bajonettverschluß, verbindbar sind.

## Claims

1. Heating or cooling system, comprising a system including an adapter (10) comprising a connecting flange (4) in which a flow pipe (6) and a return pipe (7) open, and including a hydraulic device (8), in particular a pump or a thermostatic valve, which can be removably mounted on the adapter (10) by means of a corresponding counter flange (9) in which two ducts open, wherein an orifice in the adapter (10) is aligned with an orifice of a duct of the device (8) in a coupled state, wherein the flow between the adapter (10) and the hydraulic device (8) can be interrupted by a valve means, wherein the valve means has a first sealing washer (21) which is situated on the adapter (10), which covers the connecting flange (4) from the outside and by means of which the orifices of the pipes can be sealed in the uncoupled state, wherein the valve means has a second sealing washer (24) which is situated on the hydraulic device (8), which covers the counter flange (9) and by means of which the orifices of the ducts can be sealed in the uncoupled state, wherein the two sealing washers (21, 24) bear against one another in a sealing manner in the coupled state in order to ensure a leak-proof flow between the adapter (10) and the hydraulic device (8), and wherein the sealing washers (21, 24) can be moved in the coupled state from a closed position blocking the flow to an open position, **characterised in that** the sealing washers (21, 24) can be rotated in the coupled state from a position covering the orifices into a flow position, the openings in the sealing washers being aligned with the orifices in the flow position.

2. System according to claim 1, **characterised in that** the connecting flange (4) and the counter flange (9) each have a cylindrical end face in which the respective orifices are arranged.

3. System according to one of the preceding claims, **characterised in that** the sealing washers (21, 24) bear directly against one another in the coupled state.

4. System according to one of the preceding claims, **characterised in that** the sealing washers (21, 24) are made of plastic.

5. System according to claim 1, **characterised in that** the rotation is effected by means of an actuating means which can be controlled from the outside.

6. System according to one of the preceding claims, **characterised by** a short-circuit means (22) which is situated in the adapter (10) and which has a bypass (23) for connecting the flow pipe (6) to the return pipe (7).

7. System according to claim 6, **characterised in that** the short-circuit means (22) is a disc which has the same diameter as the sealing washer (21) arranged above it and which can rotate with the sealing washer (21).

8. System according to claim 7, **characterised in that** the short-circuit means (22) and the first sealing washer (21) are together designed as one component.

9. System according to claim 5, **characterised in that** the two sealing washers (21, 24) and possibly the short-circuit means (22) are operatively connected together and can be rotated by means of the actuating means.

10. System according to claim 5 or claim 9, **characterised in that** the hydraulic device (8) comprises the actuating means.

11. System according to one of the preceding claims, **characterised in that** the adapter (10) and the hydraulic device (8) can be connected by means of a quick-action coupling (13), in particular a bayonet coupling, embracing the flanges.

## Revendications

1. Système de chauffage et de refroidissement avec un système qui comprend un adaptateur (10), avec un flasque de raccordement (4), dans lequel débouchent une conduite d'entrée (6) et une conduite de retour (7), et comprenant un dispositif hydraulique (8), en particulier une pompe ou une vanne thermostatique, qui peut être fixé de manière démontable sur l'adaptateur (10) par un contre-flasque (9) correspondant dans lequel débouchent deux canaux, un orifice dans l'adaptateur (10) étant aligné respectivement avec un orifice d'un canal du dispositif (8) dans un état accouplé et le courant entre l'adaptateur (10) et le dispositif hydraulique (8) pouvant être interrompu par un organe de vanne, l'organe de vanne présentant un premier disque d'étanchéité (21) se trouvant sur l'adaptateur (10), qui recouvre de l'extérieur le flasque de raccordement (4) et par lequel les ouvertures d'orifice des conduites peuvent être étanchées à l'état désaccouplé, l'organe de vanne présentant un second disque d'étanchéité (24) se trouvant sur le dispositif hydraulique (8), qui recouvre le contre-flasque (9) et par lequel les ouvertures d'orifice des canaux peuvent être étanchés à l'état désaccouplé, les deux disques d'étanchéité (21, 24) étant en appui étanche l'un contre l'autre à l'état accouplé pour garantir un courant sans fuite entre l'adaptateur (10) et le dispositif hydraulique (8), les disques d'étanchéité (21, 24) pouvant être amenés, à l'état accouplé, d'une position fermée bloquant le courant à une position ouverte et **caractérisé par le fait que**, à l'état accouplé, les disques d'étanchéité (21, 24) peuvent être tournés d'une position recouvrant les ouvertures d'orifice à une position de passage, les ouvertures dans les disques d'étanchéité étant alignées avec les ouvertures d'orifice dans la position de passage.

2. Système selon la revendication 1, **caractérisé par le fait que** le flasque de raccordement (4) et le contre-flasque (9) présentent respectivement une surface frontale cylindrique dans laquelle sont disposées respectivement les ouvertures d'orifice.

3. Système selon l'une des revendications précédentes, **caractérisé par le fait que** les disques d'étanchéité (21, 24) sont appui directement l'un contre l'autre à l'état accouplé.

4. Système selon l'une des revendications précédentes, **caractérisé par le fait que** les disques d'étanchéité (21, 24) sont en matière synthétique.

5. Système selon l'une des revendications précédentes, **caractérisé par le fait que** la rotation est effectuée par un organe d'actionnement pouvant être commandé de l'extérieur.

6. Système selon l'une des revendications précédentes, **caractérisé par** un organe de court-circuit (22) se trouvant dans l'adaptateur (10), qui présente une conduite de court-circuit (23) pour la liaison de la conduite d'entrée (6) avec la conduite de retour (7).

7. Système selon la revendication 6, **caractérisé par le fait que** l'organe de court-circuit (22) est un disque dans le diamètre du disque d'étanchéité (21) disposé dessus, qui est pivotant avec le disque d'étanchéité (21).

8. Système selon la revendication 7, **caractérisé par le fait que** l'organe de court-circuit (22) et le premier disque d'étanchéité (21) sont réalisés ensemble d'une seule pièce.

9. Système selon la revendication 5, **caractérisé par le fait que** les deux disques d'étanchéité (21, 24) et le cas échéant l'organe de court-circuit (22) se trouvent en liaison active l'un avec l'autre et peuvent tourner au moyen de l'organe d'actionnement.

10. Système selon la revendication 5 ou 9, **caractérisé par le fait que** le dispositif hydraulique (8) présente l'organe d'actionnement.

11. Système selon l'une des revendications précédentes, **caractérisé par le fait que** l'adaptateur (10) et le dispositif hydraulique (8) peuvent être reliés par une fermeture rapide (13) comprenant les flasques, en particulier une fermeture à baïonnette.
